# FASCICULE DE BREVET EUROPEEN

(11) **EP 0 497 139 B1**
(45) Date de publication et mention de la délivrance du brevet: **11.01.1995**
(21) Numéro de dépôt: 92100570.8
(22) Date de dépôt: 15.01.1992
(51) Int. Cl.: A61C 1/05

(54) **Tête de pièce à main et pièce à main notamment destinées à la chirurgie dentaire**
Kopf für Handstück und Handstück insbesondere für die Zahnchirurgie
Head for handpiece and handpiece especially for dental surgery

(30) Priorité: 25.01.1991 FR 9101014
(43) Date de publication de la demande: 05.08.1992
(73) Titulaire: BIEN-AIR SA, CH-2504 Bienne (CH)
(72) Inventeur: Mosimann, David, CH-2503 Bienne (CH)
(74) Mandataire: Caron, Gérard

(56) Documents cités:
- DE-U- 1 784 326
- US-A- 3 052 984
- US-A- 3 199 411
- US-A- 3 712 386

## Description

La présente invention concerne une pièce à main notamment destinée à être utilisée dans le domaine de la chirurgie dentaire.

Plus particulièrement, la présente invention concerne une tête porte-outil destinée à équiper une pièce à main dentaire.

Une tête de pièce à main comme définie dans le préambule des revendications 1 et 2 et une pièce à main comportant les caractéristiques du préambule de la revendication 19 sont exposées dans le document US-A-3 052 984.

Les têtes de pièce à main qui sont utilisées dans le domaine de la chirurgie dentaire comportent un rotor conformé pour recevoir un outil, tel que par exemple une fraise, apte à effectuer des travaux notamment de réparation.

Dans la plupart des cas, ces têtes de pièce à main comportent une motorisation qui est constituée par une turbine solidaire du rotor et tournant à de très hautes vitesses sous l'action d'un flux d'air moteur. Toutefois, ce type de tête souffre d'un manque de couple dynamique et c'est la raison pour laquelle il est nécessaire de donner au rotor, qui a pour fonction d'entraîner l'outil, des caractéristiques inertielles importantes.

Cependant, à cause de cette inertie élevée, le rotor qui tourne à haute vitesse a besoin d'un temps relativement long pour s'arrêter. Lorsque le dentiste vient de finir une opération et qu'il coupe l'alimentation du flux d'air moteur, l'outil continue de tourner dans la bouche du patient, ce qui peut provoquer des accidents graves.

La demande de brevet FR 2 612 763 propose une solution à ce problème en fournissant un système de freinage qui comporte un patin conformé pour venir en appui sur un volant d'inertie monté sur le rotor, ce patin étant commandé par un mécanisme qui peut remplir des fonctions annexes, telles que la lubrification, la production d'électricité ou la désinfection.

Ce dispositif est difficile à réaliser, d'une part, parce que la demande de brevet susmentionnée n'en donne aucun mode de réalisation précis, et que, d'autre part, il doit être capable d'être monté à l'intérieur d'une tête de pièce à main, qui par définition est une pièce miniaturisée dans laquelle la place disponible pour l'intégration d'un tel système est faible, voire nulle.

Ainsi, la présente invention a-t-elle pour but de répondre à ces inconvénients en fournissant un agencement qui permette de freiner très rapidement et de façon quasi immédiate le rotor, sans disposition d'un mécanisme complexe, et ce avec des moyens les plus simples afin de limiter les coûts.

A cet effet, l'invention a pour objet une tête de pièce à main et une pièce à main dentaire comprenant un carter ou bâti, un rotor disposé à l'intérieur du bâti et muni d'un arbre qui est destiné à recevoir un outil, des moyens moteurs permettant d'entraîner ledit rotor pour lui impliquer un mouvement et des moyens de freinage qui agissent sur le rotor pour stopper son mouvement et qui sont actionnés par le flux de commande provenant d'un fluide, les moyens de freinage comportant un organe élastiquement déformable associé à des moyens d'appui et de contre-appui susceptibles de freiner la rotation du rotor par frottement, cette tête et cette pièce à main étant caractérisées en ce que lesdits moyens de freinage enveloppent l'arbre du rotor et forment autour de celui-ci un clapet dont l'ouverture, qui est assurée par le flux de commande lui-même, permet le passage du fluide à la périphérie dudit arbre et le pilotage des moyens d'appui.

L'invention a aussi pour objet une tête de pièce à main et une pièce à main caractérisées en ce que les moyens de freinage sont conformés de sorte que ledit flux de commande, lorsqu'il croît en intensité commande la mise à l'état "0" (zéro) des moyens de freinage et inversement leur mise à l'état "1" (un) lorsqu'il diminue.

On précisera aussi que ledit flux est formé au moins indirectement par un flux de gaz moteur qui pilote une turbine dont est équipée l'invention.

Mais d'autres caractéristiques et avantages de l'invention apparaîtront mieux à la lecture de la description détaillée qui suit, prise en référence aux dessins annexés qui sont donnés à titre d'exemple, et dans lesquels :
- la figure 1 représente une vue en coupe longitudinale d'une tête d'une pièce à main selon un premier mode de réalisation de l'invention, les moyens de freinage étant dans leur position actionnée qui correspond à l'état "1" de leur fonctionnement;
- la figure 2 est une figure similaire à la figure 1, mais dans laquelle les moyens de freinage sont dans leur position relâchée correspondant à leur état "0";
- les figures 3 et 4 sont des vues en coupe longitudinale d'une tête d'une pièce à main respectivement selon un deuxième et un troisième mode de réalisation de l'invention;
- les figures 5 à 11 sont des quart de vue en coupe longitudinale d'une tête d'une pièce à main selon, respectivement, un quatrième, un cinquième, un sixième, un septième, un huitième, un neuvième et un dixième mode de réalisation de l'invention;
- la figure 12 est une vue partiellement en coupe représentant un onzième mode de réalisation de l'invention dans lequel les moyens de freinage sont intégrés dans une partie quelconque, telle que le corps d'une pièce à main; et
- les figures 13 et 14 sont des vues en coupe longitudinale d'une tête d'une pièce à main respectivement selon un douzième et un treizième mode de réalisation.

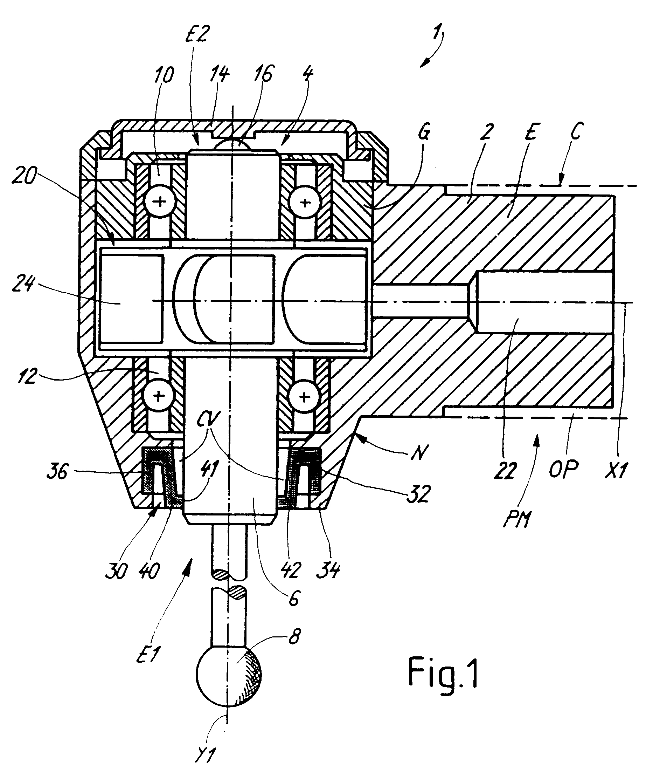

En se référant désormais à la figure 1, on décrira ci-après un premier mode de réalisation d'une tête destinée à équiper une pièce à main selon l'invention.

La tête 1 comporte un carter ou bâti 2 à l'intérieur duquel est monté libre en rotation un rotor 4. Le rotor 4 qui est destiné à tourner à de très hautes vitesses autour d'un axe géométrique Y1, comporte un arbre formant mandrin 6 qui est conformé pour recevoir et maintenir un outil, tel que par exemple une fraise 8.

L'arbre formant mandrin 6 est supporté de façon rotative à l'intérieur du bâti 2 par l'intermédiaire de deux moyens de guidage en rotation, tels que des roulements à bille 10 et 12, ou des paliers à air, non représentés.

Dans la position de la tête 1 telle qu'elle est représentée sur la figure 1, le roulement 12 est dit roulement inférieur, tandis que le roulement 10 est dit roulement supérieur.

Le roulement inférieur 12 est logé à l'intérieur d'une partie caractéristique du bâti 2, appelée nez et référencée N. Le roulement supérieur 10 est, quant à lui, logé dans une cage G rapportée et chassée dans le bâti 2. On notera que du nez N s'étend une autre partie caractéristique de la tête 1, appelée embout E, dont le pourtour extérieur sensiblement cylindrique est destiné à venir s'engager directement ou indirectement par l'intermédiaire d'une bague de pivotement, non représentée, dans un organe de préhension OP.

La tête 1 et l'organe de préhension OP auxquels sont généralement associés d'autres composants, tels que des moyens d'éclairage, constituent une pièce à main PM. L'organe de préhension OP est généralement formé par le corps C de la pièce à main PM.

A l'intérieur de l'arbre formant mandrin 6 est prévu un mécanisme de blocage, non représenté, permettant pour des raisons d'interchangeabilité la prise mécanique du manche de l'outil 8, ainsi que son relâchement.

Ainsi, l'extrémité libre E1 du rotor 4, et plus particulièrement l'extrémité de l'arbre formant mandrin 6 qui fait sensiblement saillie du bâti 2, comporte un évidement, de même non représenté, destiné à recevoir le manche de l'outil 8 sur lequel vient agir ledit mécanisme de blocage.

A cet effet, l'extrémité opposée E2 du mandrin 6 coopère avec un bouton poussoir 14 qui est axialement déplaçable selon l'axe Y1, par rapport à la tête 1, et qui repose sur un organe de commande, tel qu'une bille 16, appartenant au mécanisme de blocage du mandrin.

Par ailleurs, la tête 1 comporte des moyens moteurs qui sont susceptibles d'impliquer au rotor 4 un mouvement de rotation autour de l'axe géométrique Y1.

Ces moyens moteurs comportent une turbine 20 qui est solidaire de l'arbre formant mandrin 6 et qui est actionnable par un flux de gaz moteur, tel que de l'air comprimé.

L'embout E comporte un canal d'arrivée d'air sous pression 22 qui débouche directement sur les ailettes d'un corps d'aubage 24 de la turbine 20.

De plus, dans l'embout E est ménagé un canal d'échappement non représenté, débouchant dans la chambre de la tête 1, dans laquelle est logée la turbine 20. Ce canal d'échappement permet l'évacuation de la majeur partie de l'air moteur qui a servi à actionner la turbine 20.

Comme on l'a expliqué ci-avant, le rotor 4 est destiné à tourner à de très hautes vitesses de l'ordre de 250 à 400 000 Tr/min (rpm).

Pour obtenir un couple de travail dynamique suffisant, on donne au rotor 4 un moment d'inertie élevé par choix d'un matériau spécifique, tel que de l'acier.

Ainsi, lorsqu'il est lançé, le rotor 4 a besoin d'un temps relativement long pour pouvoir s'arrêter, ce qui est dangereux lorsque l'outil se trouve, après travail, dans la bouche du patient.

A cet effet, la tête 1 selon l'invention comporte des moyens de freinage du rotor 4, ces moyens de freinage, comme on le comprendra ci-après, pouvant être actionnés par un fluide.

Dans l'exemple de réalisation de la figure 1, les moyens de freinage selon l'invention sont constitués essentiellement par une manchette ou joint à lèvre 30 monté fixement par rapport au carter 1.

La manchette 30 est logée dans un chambrage 32 ménagé dans le nez N de la tête 1. Le chambrage 32, qui débouche vers l'extérieur de la tête 1 à l'extrémité libre du nez N, est prolongé par un collet 34 venant dans, cet exemple, de matière avec le bâti 2.

La manchette 30 comporte un siège 36 qui forme un moyen de maintien de cette manchette dans le nez N. Grâce à la forme en L renversé du logement partiellement fermé qui est défini par le chambrage 32 et par le collet 34, le siège 36 de la manchette 30 est bloqué dans le chambrage 32 tant axialement que radialement.

Le joint à lèvre ou manchette 30 comporte à son extrémité libre une lèvre 40 qui est destinée à venir en appui contre le pourtour extérieur cylindrique du mandrin 6 qui forme des moyens de contre-appui de la lèvre 40.

La manchette 30 comporte de plus une jupe 42 qui relie la lèvre 40 au siège 36. Tous les organes fonctionnels de la manchette 30, à savoir le siège 36, la jupe 42 et la lèvre 40 viennent de matière. La manchette 30 étant de préférence réalisée en un matériau élastomère, tel que du nitrile ou du silicone, on comprend que la jupe 42, grâce à sa liaison avec le siège encastré 36, et lorsqu'elle est soumise à une légère tension mécanique, forme un organe élastique de rappel qui tend, en permanence, à mettre la lèvre 40 en appui contre le rotor 4, et plus particulièrement contre l'arbre formant mandrin 6.

Ainsi, la lèvre 40 est maintenue de façon permanente contre le pourtour de l'arbre formant mandrin 6 lorsque la manchette 30 n'est pas sollicitée, c'est-à-dire lorsqu'elle est dans son état de repos, comme le montre la figure 1.

Grâce à la nature du couple de matériaux, respectivement de la lèvre 40 et de l'arbre 6, à savoir élastomère - métal, la lèvre 40, et notamment sa surface cylindrique libre 41, forme des moyens d'appui aptes à venir en contact de frottement sur le rotor 4 pour le freiner, et ce notamment lorsque cette partie de frottement que forment les moyens d'appui 41 est soumise à l'action de rappel élastique de la jupe 42.

On comprend ainsi que les moyens de freinage, c est-à-dire la manchette 30, sont disposés de façon coaxiale au rotor 4, si bien que la manchette 30 enveloppe de façon étanche au moins une partie du rotor 4. De façon plus précise, la manchette 30 enveloppe l'extrémité libre E1 de l'arbre formant mandrin 6, c'est-à-dire l'extrémité qui reçoit l'outil 8.

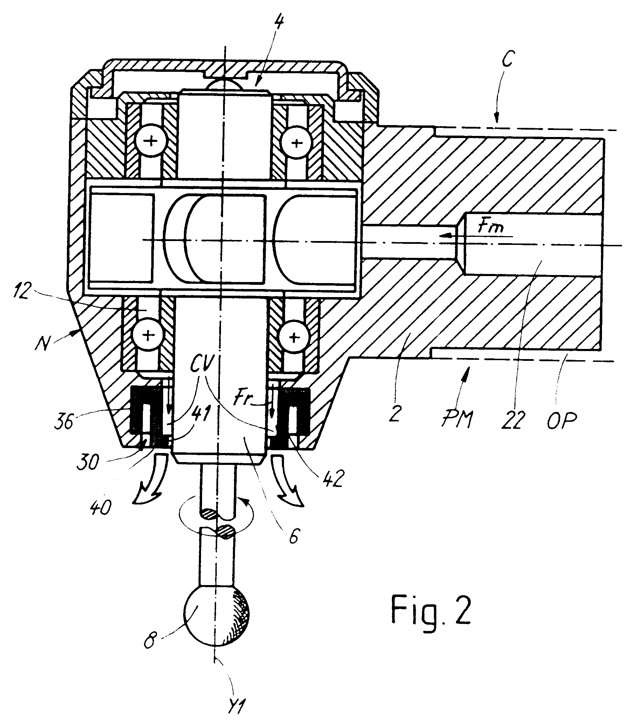

En se référant de plus à la figure 2, on décrira désormais le fonctionnement des moyens de freinage qui viennent d'être décrits.

Comme on le comprend, lorsque la manchette 30 n'est pas sollicitée, et qu'elle reste à l'état de repos, la lèvre 40 par son action sur l'arbre formant mandrin 6 stoppe le mouvement du rotor 4, si bien que dans cette position les moyens de freinage selon l'invention sont actionnés et par convention sont à l'état binaire "1" (un). La manchette 30 est dite être à l'état de repos lorsqu'aucun flux, émis par un fluide, et notamment lorsqu'aucun flux gazeux ne vient modifier sa position d'appui contre le rotor 4, tel que cela est représenté sur la figure 1. Dans le cas le plus simple, on observe cet état lorsqu'aucun flux de gaz moteur n'est transmis par le canal d'arrivée 22. Une situation similaire est observée lorsque le flux gazeux est à un niveau d'intensité très faible.

A contrario, lorsqu'on commande l'arrivée du flux de gaz moteur, représenté par la flèche référencée Fm, par le canal d'arrivée 22, ce flux, d'une part, vient frapper les ailettes du corps d'aubage 24 de la turbine 20 et entraîne le rotor 4 en rotation, mais d'autre part, vient créer une légère pression à l'intérieur de la manchette 30.

Le flux de gaz moteur Fm ayant transmis son énergie au rotor 4 et ayant fui par le canal d'échappement de la tête 1, il ne reste qu'une partie de ce flux moteur qui traverse le roulement 12. Cette partie est représentée par une flèche référencée Fr et elle forme un flux gazeux résiduel provenant donc dudit flux de gaz moteur Fm qui actionne indirectement la manchette 30.

Ainsi, la manchette 30 est dans son état sollicité puisque la pression créée par le flux de commande formé ici par le flux gazeux résiduel Fr, vient exercer une action mécanique sur la jupe 42 et sur la lèvre 40 qui se déplaçent radialement vers l'extérieur jusqu'à ce que la lèvre 40 quitte son contact avec le pourtour cylindrique extérieur de l'arbre formant mandrin 6 et libère le rotor 4.

Ainsi, on observe que les moyens de freinage sont relâchés et sont, par convention, à l'état binaire "0" (zéro). On comprend donc de ce qui vient d'être décrit que le flux gazeux Fr, lorsqu'il croît en intensité, commande la mise à l'état "0", c'est-à-dire le relâchement, des moyens de freinage, tandis qu'inversement ce flux gazeux Fr commande la mise à l'état "1" des moyens de freinage, c'est-à-dire, leur actionnement, lorsqu'il diminue, voire lorsqu'il est nul. On comprend aussi que, dans ce mode de réalisation, les moyens de freinage 30 sont pilotés par le flux gazeux résiduel Fr qui provient du flux de gaz moteur Fm. En d'autres termes, ce flux commande négativement les moyens de freinage qui sont mis en position de marche lors d'une chute de pression à l'intérieur de la tête 1.

Ainsi, l'invention offre des caractéristiques extrêmement avantageuses puisque la commande des moyens de freinage par l'intermédiaire d'un flux gazeux, et notamment au moins indirectement par le flux de gaz moteur Fm qui pilote la turbine 20, permet de façon concomitante le relâchement des moyens de freinage et l'entraînement en rotation du rotor 4, et donc de l'outil 8. De plus, la commande desdits moyens de freinage par ce flux de gaz moteur permet aussi de façon concomitante l'actionnement des moyens de freinage et la rupture de l'entraînement en rotation du rotor 4, notamment lorsque le praticien commande l'arrêt en rotation de l'outil 8. On observera que toutes ces manoeuvres se font de façon entièrement automatique grâce à la coopération de la manchette 30 et du flux gazeux qui l'actionne.

On précisera que cette action est favorisée par la forme particulièrement évasée du pourtour intérieur de la jupe 42 en direction de l'arrivée du flux gazeux résiduel Fr, c'est-à-dire en direction de la turbine 20. Cette forme intérieure évasée de la manchette 30 constitue donc une chambre à volume variable CV qui reçoit le flux gazeux résiduel Fr et qui est définie par les moyens de freinage à l'intérieur de la tête 1, et notamment par la jupe 42 et par la lèvre 40. Cette chambre CV est ouverte vers le centre de la tête 1, en direction du roulement inférieur 12 et de la turbine 20, ce qui correspond à la région d'arrivée du flux de gaz résiduel Fr sur l'extrémité libre E1 du mandrin 6.

On précisera aussi que les moyens de freinage sont pilotés par une faible pression qui est de l'ordre de 0,1 à 0,3 bar (0,1 à 0,3 · 10⁵ Pa). Cette pression résiduelle peut être augmentée, par exemple par rétrécissement du canal d'échappement (non représenté) de la tête 1.

On remarquera aussi que dans ce mode de réalisation les moyens de freinage forment un bouclier anti-poussière qui évite la pollution de l'intérieur de la tête 1. En effet, lorsque la manchette 30 est à l'état de repos elle emprisonne de façon étanche l'extrémité libre débouchante E1 de l'arbre formant mandrin 6, tandis que lorsqu'elle est sollicitée et qu'elle offre un passage entre la lèvre 40 et l'arbre 6, le flux d'air résiduel Fr vient chasser dans ce passage toute particule qui s'y présenterait.

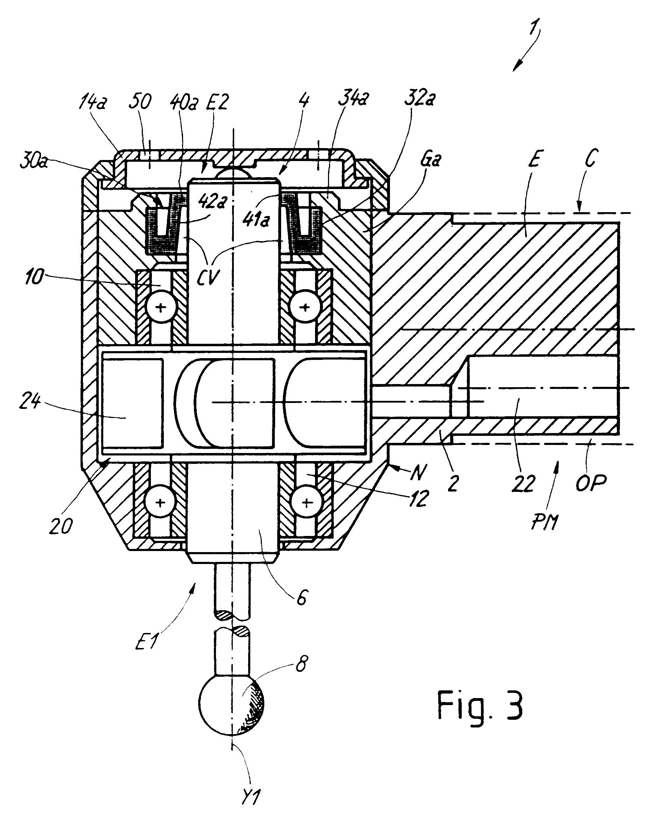

En résumé, on a fournit un dispositif dans lequel les positions "ON/OFF", c'est-à-dire marche et arrêt, des moyens de freinage et des moyens moteurs du rotor 4 sont en opposition de phase et s'embrayent et se débrayent de façon automatique, avec en plus la disposition permanente d'un bouclier anti-poussière. En se référant désormais à la figure 3, on décrira ci-après un deuxième mode de réalisation d'une tête d'une pièce à main dentaire selon l'invention.

Dans cet exemple, la manchette 30a qui est de structure identique à la manchette 30, est disposée, en comparaison du premier mode de réalisation, au voisinage de l'extrémité E2 du rotor 4. La manchette 30a est donc logée au voisinage du dos de la tête 1, c'est-à-dire au voisinage d'un bouton poussoir 14a qui est similaire au bouton poussoir 14.

La manchette 30a est logée à l'intérieur d'une cage Ga qui est rapportée et chassée, comme la cage G, à l'intérieur du bâti 2 et qui reçoit la bague extérieure du roulement supérieur 10. A cet effet, la cage Ga comporte un chambrage 32a qui s'ouvre au moins partiellement vers le bouton poussoir 14a et qui est terminé par un collet 34a venant de matière avec la cage Ga. Le fonctionnement de la manchette 30a est identique à celui de la manchette 30 précédemment décrite et ne sera donc pas repris ici de façon détaillée.

On précisera toutefois que pour permettre l'évacuation du flux de gaz qui s'échappe de la manchette 30a lorsqu'elle est sollicitée, on a prévu sur le bouton poussoir 14a des orifices d'échappement 50.

Dans un autre mode de réalisation non représenté on dispose à l'intérieur de la tête 1 deux moyens de freinage correspondant respectivement aux manchettes 30 et 30a dans leur configuration et position représentées aux figures 1 et 3.

On précisera que les caractéristiques fournies par les moyens de freinage des figures 1 et 3 peuvent être modifiées en choisissant des matériaux différents, pour l'un ou l'autre ou pour les deux manchettes 30 et 30a, ou en les dimensionnant de façon sensiblement différente.

Par ailleurs, bien que non représentés, on peut associer aux manchettes 30 et 30a des moyens mécaniques supplémentaires venant renforçer l'action de la jupe 42, 42a, ces moyens étant constitués par exemple par une bague élastique annulaire entourant la lêvre 40, 40a ou noyée à l'intérieur de celle-ci. Ces moyens peuvent être constitués par une bague cylindrique élastique fendue, réalisée par exemple dans un matériau métallique et entourant la jupe 42, 42a.

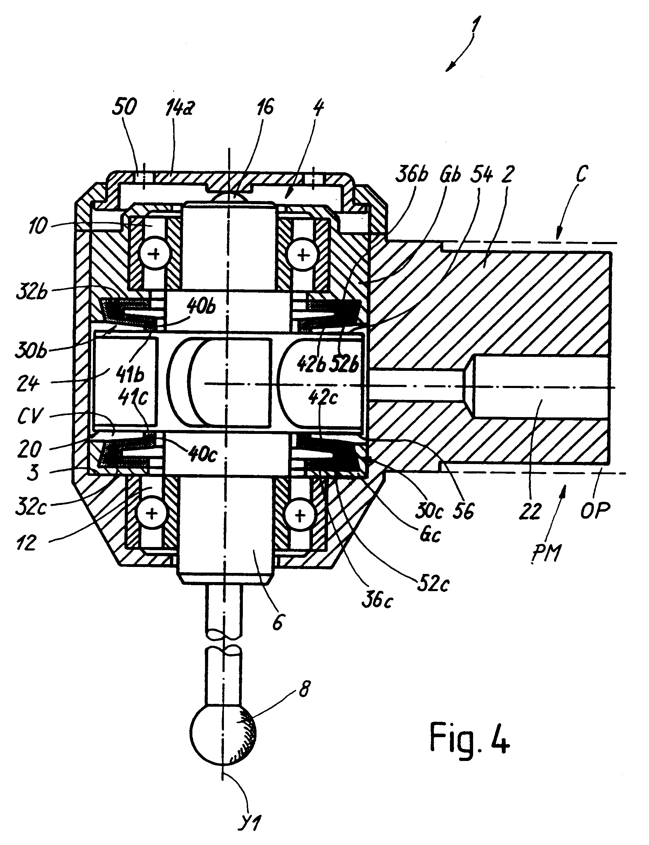

En se référant désormais à la figure 4, on décrira ci-après un troisième mode de réalisation de la tête de pièce à main selon l'invention.

Dans ce mode de réalisation, les moyens de freinage comportent deux manchettes 30b et 30c, dites respectivement supérieure et inférieure, qui sont montées de part et d'autre du corps d'aubage 24 de la turbine 20.

La manchette supérieure 30b est logée dans une première cage Gb qui est rapportée et chassée dans le bâti 2 et qui supporte le roulement supérieur 10. La manchette 30b est donc montée fixement par rapport au bâti 2 entre le roulement supérieur 10 et la turbine 20.

La manchette inférieure 30c, quant à elle, est logée dans une deuxième cage Gc qui est aussi rapportée et chassée dans le bâti 2 et qui repose contre un épaulement 3 de ce bâti, au proche de la bague extérieure du roulement inférieur 12. Ainsi, la manchette inférieure 30c est aussi montée fixement par rapport au bâti 2, mais entre le roulement inférieur 12 et la turbine 20.

Les manchettes 30b, 30c sont disposées tête-bêche et sont encastrées dans des chambrages correspondants 32b et 32c ménagés respectivement dans les cages rapportées et chassées Gb et Gc. On remarquera que dans ce mode de réalisation, les manchettes 30b, 30c sont bloquées axialement en direction de la turbine 20, vers le centre de la tête 1, par un flanc latéral conique rentrant 52b, 52c ménagé dans le chambrage de chaque cage Gb, Gc.

Par ailleurs, la lèvre 40b, 40c de chaque manchette 30b, 30c est maintenue en contact de pression sur le rotor 4 par le même principe que ceux des modes réalisation précédents, mais ici les lèvres 40b et 40c appuient et frottent sur le corps d'aubage 24. Plus particulièrement, l'enveloppe du corps d'aubage 24 forme des flancs latéraux 54, 56 dits respectivement supérieur et inférieur, qui ont une forme de disque orienté normalement à l'axe Y1. On précisera que ce mode de réalisation offre de plus une meilleure réponse du rotor 4 à l'accélération lorsqu'il est soumis à l'action d'un flux de gaz moteur, puisque les manchettes 30b et 30c forment respectivement des moyens d'étanchéité qui empêchent les fuites d'air, lors de l'arrivée du fluide moteur depuis le canal d'arrivée 22.

Alors que dans les modes de réalisation précédents la lèvre 40,40a des moyens d'étanchéité a une action sur le rotor 4 orientée radialement par rapport à l'axe géométrique de rotation Y1, dans le mode de réalisation, figure 4, les lèvres d'étanchéité 40b et 40c ont une action orientée axialement par rapport à la tête 1, c'est-à-dire orientée de façon parallèle à l'axe géométrique de rotation Y1.

Le fonctionnement des moyens d'étanchéité de ce mode de réalisation est similaire à celui des modes de réalisation précédents.

En effet, lorsque le rotor 4 est soumis à l'action d'un flux de gaz moteur provenant du canal d'arrivée 22, l'augmentation de pression à l'intérieur de la tête 1, c'est-à-dire dans la chambre à volume variable CV qui reçoit la turbine 20, génère une contrainte mécanique sur les jupes 42b et 42c des manchettes respectivement 30b et 30c, ce qui écarte les lèvres 40b et 40c de la turbine 20, et notamment du rotor 4, et ce qui libère le mouvement de l'outil 8. Ainsi, lorsque les lèvres 40b et 40c reposent sur la turbine 20 du rotor 4, les moyens de freinage sont actionnés et sont donc à l'état binaire "1", tandis qu'en présence du flux de gaz moteur les lèvres 40b et 40c se soulèvent, ce qui commande le relâchement des moyens de freinage, c est-à-dire leur mise à l'état binaire "0".

On précisera aussi qu'une seule manchette 30b ou 30c convenablement choisie peut être prévue, si bien que les moyens de freinage agissent dans ce cas sur au moins un des flancs latéraux 54 ou 56 du corps d'aubage 24. Par ailleurs, les cages rapportées G (figure 1), Ga (figure 3) ainsi que Gb et Gc (figure 4) peuvent être guidées par une portée et vissées dans le bâti 2 de la tête 1.

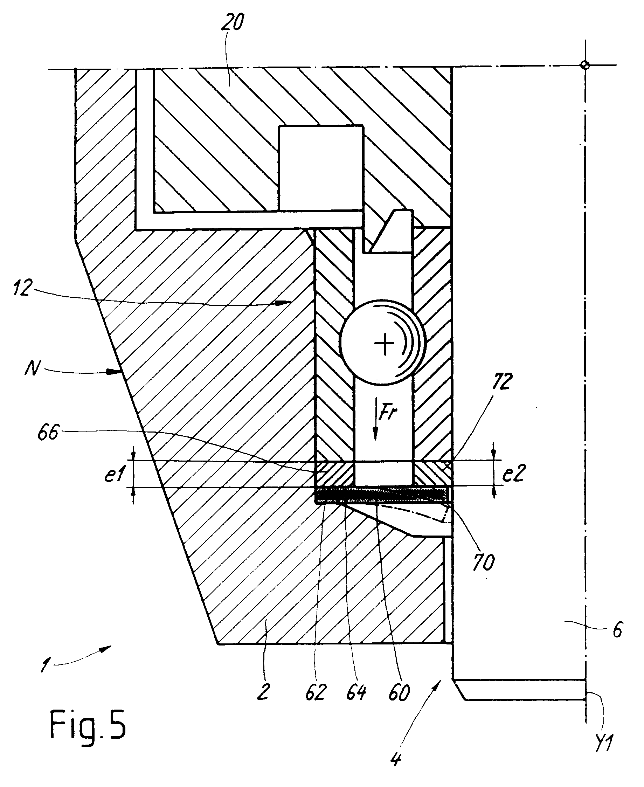

En se référant désormais à la figure 5, on décrira ci-après un quatrième mode de réalisation d'une tête d'une pièce à main selon l'invention.

Dans ce mode de réalisation, les moyens de freinage comportent au moins une rondelle annulaire 60 qui est de même réalisée en un matériau élastomère, tel que du nitrile ou du silicone, et qui est maintenue de façon fixe par rapport au carter ou bâti 2 par pincement, c'est-à-dire par encastrement de son pourtour extérieur entre deux épaulements respectivement 62 et 64.

L'épaulement 64 dans la position de la tête 1 telle que représentée sur la figure 5, est dit épaulement inférieur. Cet épaulement 64 est solidaire du bâti 2, et dans cet exemple, il vient de matière avec celui-ci.

Par ailleurs, l'épaulement supérieur 62 est formé par une entretoise 66 logée dans le nez N du bâti 2 entre la rondelle 60 et la bague extérieure du roulement à bille inférieur 12 qui est maintenu par un engagement à force.

La région centrale de la rondelle 60 qui est voisine de son pourtour cylindrique intérieur repose par un appui latéral contre des moyens de contre-appui 70 qui sont solidaires du rotor 4, et plus particulièrement de l'arbre formant mandrin 6.

Les moyens de contre-appui 70 sont constitués par une entretoise 72, dite de contre-appui, qui est chassée, dans cet exemple, sur l'arbre 6, et notamment contre la bague intérieure du roulement inférieur 12.

L'entretoise de blocage 66 présente une épaisseur e1, tandis que l'entretoise de contre-appui 72 présente une épaisseur e2.

On précisera ici que les épaisseurs e1 et e2 sont différentes, l'entretoise de contre-appui 72 présentant une épaisseur e2 supérieure à l'épaisseur e1 de l'entretoise de blocage 66.

Ainsi, cette disposition constitue un moyen de mise sous tension permanente de la rondelle 60 contre le rotor 4, notamment lorsque cette rondelle 60 n'est pas sollicitée par un élément extérieur, c'est-à-dire lorsqu'elle est maintenue dans son état de repos.

On précisera qu'une telle fonction pourrait être constituée par plusieurs protubérances ménagées sur la rondelle 60 en regard des moyens de contre-appui 70, ou par des nervures semi-toriques ou tout autre moyen.

Ainsi, la rondelle annulaire 60 est mise sous tension élastique sur le contre-appui 70 qui est solidaire du rotor 4, ce qui permet le freinage efficace de ce dernier.

Le fonctionnement détaillé de ce mode de réalisation ne sera pas ici décrit, puisque il est tout à fait similaire à ceux précédemment expliqués.

En effet, lorsque la turbine 20 est sollicitée par un flux de gaz moteur, non représenté, un flux de gaz résiduel Fr qui passe au travers du roulement à bille inférieur 12, vient actionner la rondelle 60 qui quitte son contact de frottement sur les moyens de contre-appui 70, ce qui libère l'arbre formant mandrin 6, et donc le rotor 4. Lorsque le flux de gaz moteur est interrompu, ou est très faible, la rondelle 60 grâce à sa mise sous tension élastique de rappel vient en contact sur les moyens de contre-appui 70, ce qui freine le mouvement de rotation du rotor 4, jusqu'à son arrêt.

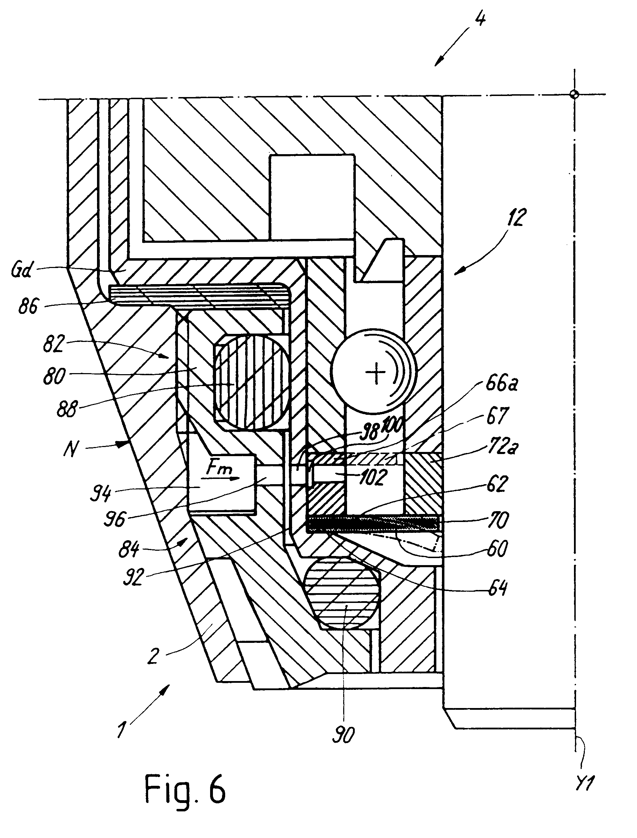

En se référant désormais à la figure 6, on décrira ci-après un cinquième mode de réalisation de la tête de pièce à main selon l'invention.

Dans ce mode de réalisation, la disposition de la rondelle 60 et des entretoises de blocage et de contre-appui est identique à celle précédemment décrite en liaison avec la figure 5.

Toutefois, on a ici rapporté dans le nez N du bâti 2 un dispositif d'amenée du flux de gaz, par exemple un flux de gaz moteur Fm, vers les moyens de freinage 60.

En effet, à l'intérieur du nez N est logée une douille rapportée 80 qui est maintenue dans le nez N par une liaison filetée 82 et par une butée axiale 84 constituée par deux régions coniques qui sont coaxiales à l'axe de rotation Y1 du rotor et qui sont mises en contact.

A l'intérieur de la douille rapportée 80 est logée une cage de même rapportée Gd, à l'intérieur de laquelle sont engagées respectivement la rondelle 60, une entretoise de blocage 66a ainsi que la bague extérieure du roulement inférieure 12.

La rondelle 60 est en contact de pression contre une entretoise de contre-appui 72a, similaire à celle précédemment décrite. Comme cela est représenté en traits mixtes interrompus, l'entretoise 66a peut éventuellement comporter une paroi d'étanchéité 67 s'étendant au-dessus d'orifices d'amenée que l'on décrira ci-après, vers l'entretoise de contre-appui 72a.

Entre la cage rapportée Gd et la douille 80 est interposé un coussinet d'amortissement 86.

De plus, la douille rapportée 80 comporte deux joints toriques respectivement 88 et 90 qui assurent une étanchéité et un montage flottant du rotor 4 dans la tête 1.

On remarquera qu'entre la douille rapportée 80 et la cage Gd se trouve un espace annulaire étanche 92 susceptible de recevoir un fluide sous pression.

La douille 80 comporte une rainure circulaire extérieure 94 dans laquelle peut circuler, selon cette exemple de réalisation, le flux de gaz moteur Fm qui est amené depuis divers canaux, non représentés. Cette rainure circulaire communique avec une série d'orifices radiaux 96 qui débouchent dans la chambre 92. La cage rapportée Gd comporte de même une série d'orifices radiaux 98 qui communiquent avec la chambre 92 et qui débouchent dans une rainure circulaire 100 ménagée à la périphérie extérieure de l'entretoise 66a. Cette rainure 100 communique avec une série d'orifices radiaux 102 de même ménagés dans l'entretoise 66a et qui débouchent au voisinage de la rondelle 60.

On comprend donc que le flux de gaz, et notamment le flux de gaz moteur Fm peut venir directement agir sur la rondelle 60 pour piloter son fonctionnement, à l'image du flux d'air résiduel décrit dans les modes de réalisation précédents. On notera ici que les moyens de freinage sont actionnés par le flux de gaz résiduel Fr et par le flux de gaz moteur Fm.

On précisera aussi que ce mode de réalisation est particulièrement avantageux puisqu'il permet d'associer les moyens de freinage selon l'invention à une pièce à main dont les moyens moteurs comportent un micromoteur électrique qui entraîne un engrenage solidaire du rotor. Ces moyens moteurs ne sont pas ici représentés puisque leur réalisation est bien connue et est à la portée de l'homme du métier. On précisera que, dans ce cas, le flux de gaz provenant de la rainure 94 est un flux autre que le flux de gaz moteur qui n'existe pas. Il peut être constitué par un flux de pulvérisation dit de "Spray".

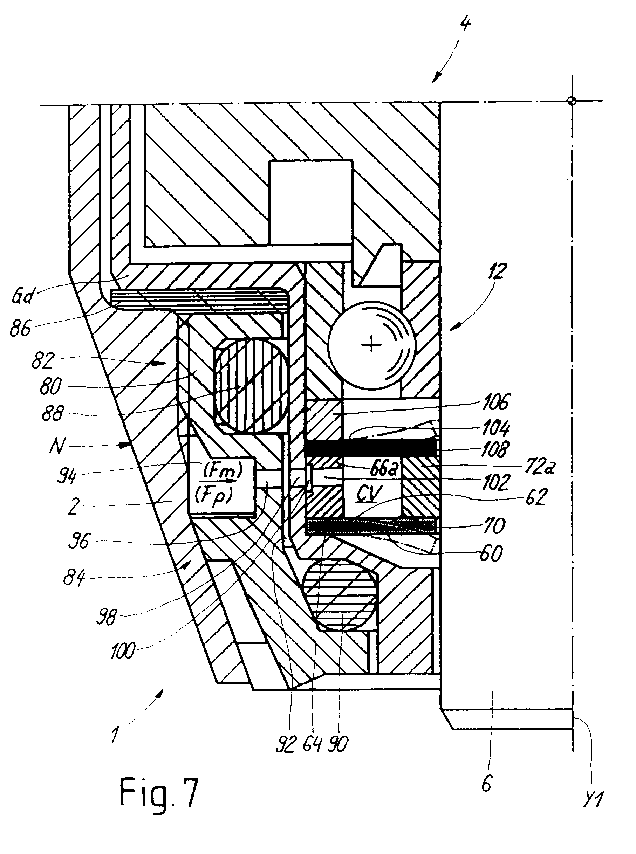

On se référera désormais à la figure 7 qui représente un sixième mode de réalisation d'une tête d'une pièce à main selon l'invention.

Dans ce mode de réalisation, on a disposé une deuxième rondelle élastique 104 identique à la rondelle 60, entre l'entretroise de blocage 66a et une seconde entretoise de blocage 106. Ainsi, les deux rondelles élastiques 60 et 104 emprisonnent de part et d'autre l'entretoise de contre-appui 72a qui est chassée sur le mandrin 6 et qui comporte des moyens de contre-appui inférieurs 70 et des moyens de contre-appui supérieurs 108.

Dans ce cas, le flux d'actionnement gazeux qui pilote les deux moyens de freinage 60 et 104 peut être constitué par le flux de gaz moteur Fm dans le cas d'un entraînement à turbine, ou par n'importe quel flux, par exemple pour un flux d'un fluide de pulvérisation Fp, dans le cas d'un autre type d'entraînement.

La chambre CV est donc totalement fermée lors du freinage. On précisera que l'on peut aussi orienter les orifices radiaux 102 de sorte qu'ils dirigent l'arrivée du flux de gaz directement vers les rondelles 60 et 104, par exemple au droit de celles-ci.

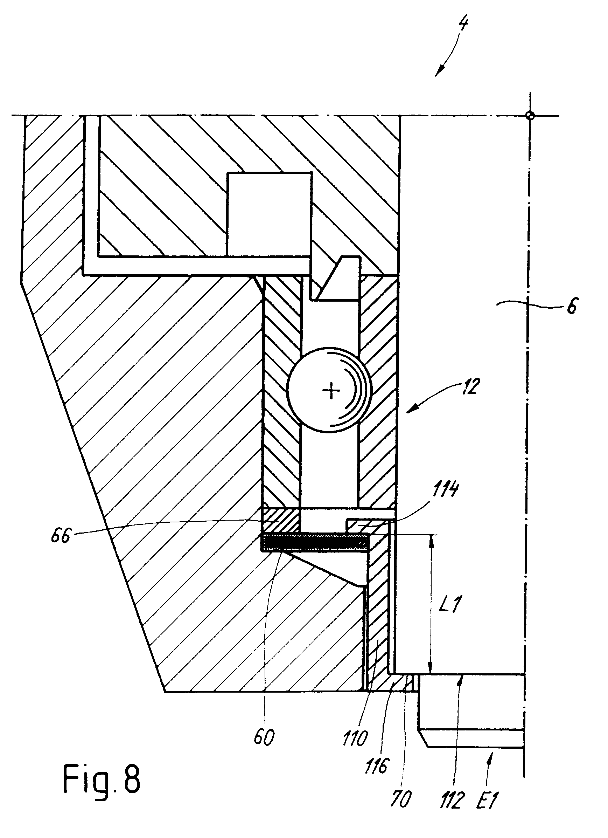

On se référera désormais à la figure 8 qui représente un septième mode de réalisation d'une tête d'une pièce à main selon l'invention.

Dans ce mode de réalisation, l'entretoise 72 ou 72a précédemment décrite a été remplacée par une douille ou manchon 110 qui est montée de façon coaxiale au rotor 4, et qui est interposé entre la rondelle 60 et les moyens de contre-appui 70 du rotor 4.

Toutefois, dans ce mode de réalisation, les moyens de contre-appui 70 sont constitués par un épaulement 112 qui est directement ménagé sur l'arbre formant mandrin 6, au voisinage de son extrémité E1.

On remarquera que le manchon 110 est en appui permanent contre la rondelle 60 par l'intermédiaire d'un collet 114 qui fait saillie radialement vers l'extérieur, et qui sous l'action de la rondelle 60, fournit en permanence une traction du manchon 110 en direction des moyens de contre-appui 70.

A cet effet, le manchon 110 comporte de plus à son autre extrémité libre un collet 116 qui s'étend radialement vers l'intérieur et qui forme un épaulement apte à venir en contact de pression sur les moyens de contre-appui 70.

On précisera aussi que la longueur L1 entre les deux épaulements formés par les collets respectifs 114 et 116 est prévue sensiblement plus petite que la cote fonctionnelle classique, si bien que la rondelle 60 de nouveau se trouve sous tension permanente et exerce une action élastique sur les moyens de contre-appui 70, tant que cette rondelle 60 n'est pas sollicitée par un flux de gaz.

Le fonctionnement de ce mode de réalisation est le suivant.

Lorsque la rondelle 60 est soumise à l'action d'un flux de gaz, elle est sollicitée et elle se déplace en direction de l'extrémité E1 du rotor 4 pour laisser passer le flux de gaz qui la sollicite, si bien que le manchon 110 quitte son contact avec le contre-appui 70 et n'exerce plus aucune action de freinage.

Toutefois, lorsque le flux de gaz est coupé, ou est d'intensité insuffisante, la rondelle 60 grâce à sa mise sous contrainte retrouve élastiquement sa position d'origine, si bien que le manchon 110, par l'intermédiaire du collet 116, vient en contact de pression sur les moyens de contre-appui 70, c'est-à-dire qu'il frotte sur l'épaulement ménagé sur l'arbre formant mandrin 6, ce qui freine le mouvement de rotation du rotor 4 et bloque l'outil, ici non représenté.

On précisera que le manchon 110 peut être réalisé en un matériau métallique, si bien que le type de frottement entre le collet 116 et les moyens de contre-appui 70 peut être constitué par un couple métal - métal. On obtient donc une résistance à l'usure très importante.

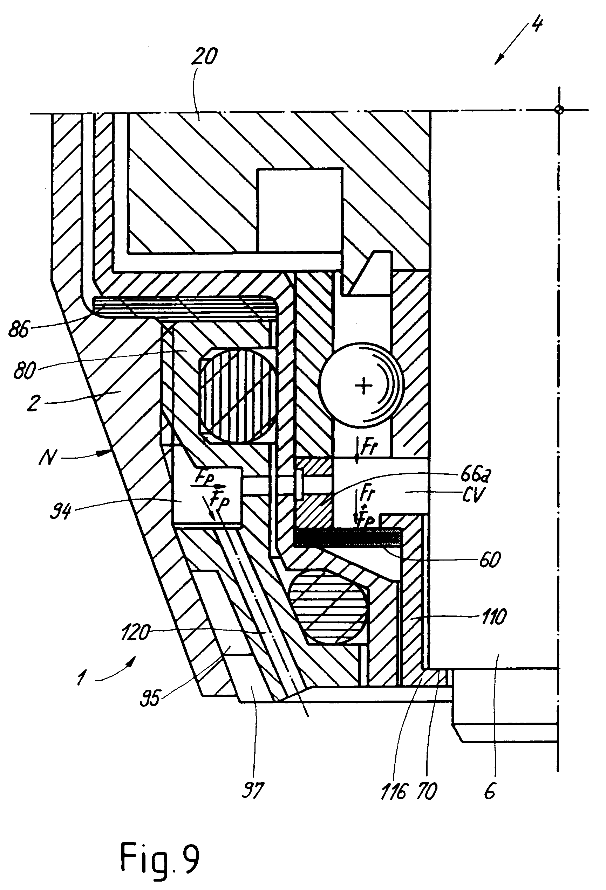

La figure 9 représente une variante de réalisation à la disposition qui vient d'être décrite, dans laquelle on a disposé dans le nez N de la tête 1 un dispositif d'amené d'un flux gazeux, similaire à celui décrit en référence à la figure 6.

Toutefois, dans ce mode de réalisation, la rainure annulaire périphérique 94 reçoit un flux de gaz Fp dit flux de pulvérisation ou de "spray", permettant la pulvérisation d'un fluide gazeux qui va s'associer à un flux de liquide provenant d'une autre rainure circulaire 95 qui débouche dans des canaux convergents 97. La douille 80 comporte de plus des canaux 120 d'amenée du fluide gazeux de pulvérisation vers le site de travail, ces canaux convergeant aussi vers la fraise, non représentée, parallèlement aux canaux 97. Le mélange entre ces deux fluides, qui est dit mélange de "spray" est orienté vers le site de travail de la fraise pour refroidir la partie traitée. Là encore le flux de pulvérisation Fp par communication entre la rainure 94 et la chambre variable CV définie par la rondelle 60, vient solliciter les moyens de freinage formés par la rondelle 60, le manchon 110 et les moyens de contre-appui ménagés sur l'arbre formant mandrin 6.

Le fonctionnement de ce mode de réalisation est identique à celui décrit en relation avec la figure 8, si ce n'est que le flux de gaz qui sollicite la rondelle 60 est constitué à la fois par le flux de gaz résiduel Fr provenant du flux de gaz moteur, non représenté, et par le flux de gaz de pulvérisation Fp provenant de la rainure circulaire 94.

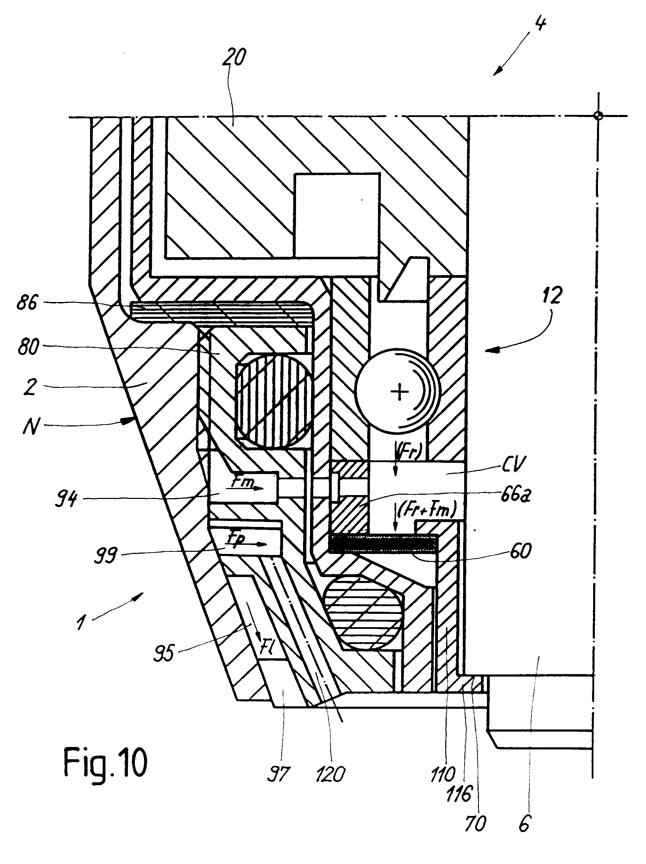

En se référant désormais à la figure 10, il est représenté un neuvième mode de réalisation d'une tête d'une pièce à main selon l'invention, dans laquelle la douille rapportée 80 comporte désormais trois rainures distinctes d'amenée de fluides, une première 94 qui correspond à une dérivation du fluide moteur vers la rondelle élastique de freinage 60, une seconde rainure 99 d'amenée du fluide gazeux de pulvérisation ou de "spray" Fp vers les canaux convergents 120, et enfin une troisième rainure 95 d'amenée du fluide liquide de pulvérisation F1 qui est destiné à former le mélange de "spray" avec le fluide gazeux de pulvérisation Fp. On précisera encore ici que le flux Fm qui est véhiculé par la rainure circulaire 94 peut être constitué par un autre flux que le flux de gaz moteur destiné à entraîner le rotor 4, et ce notamment dans le cas d'une transmission du rotor, telle qu'une transmission à engrenage.

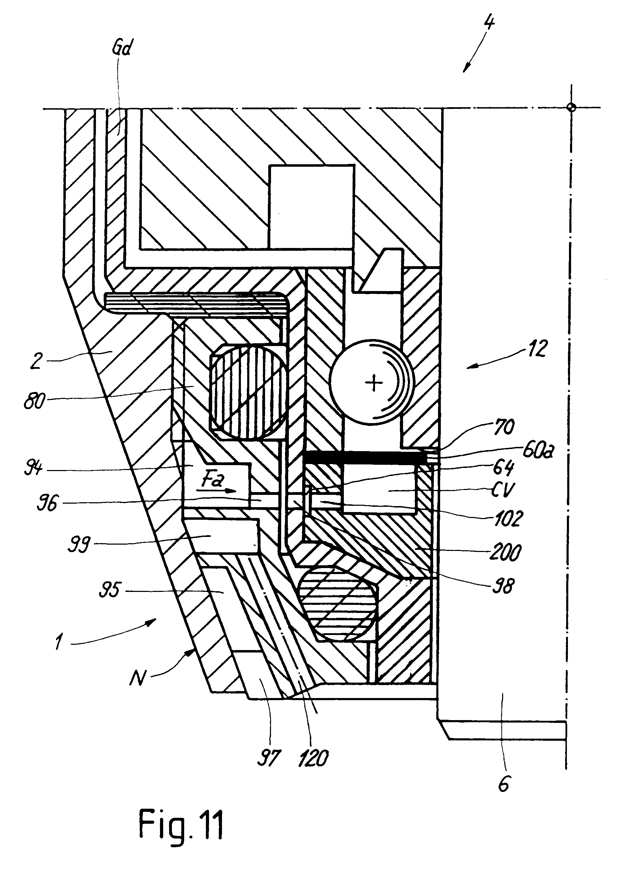

La figure 11 représente un dixième mode de réalisation de l'invention, dans lequel une rondelle élastique de freinage 60a, de structure similaire à celle, 60, précédemment décrite, est plaquée contre une bague rainurée 200 dans laquelle est formée une chambre à volume variable CV s'ouvrant directement vers la rondelle 60a.

La chambre à volume variable CV reçoit un flux de gaz provenant de la rainure circulaire 94, au travers d'orifices radiaux 96, 98 et 102 respectivement ménagés dans la douille rapportée 80, la cage Gd et dans la bague 200. La bague 200 comporte de plus une rainure extérieure circulaire 64, identique à celle de l'entretoise 66a de la figure 7. On précisera que dans une variante de réalisation la bague 200 peut venir de matière avec la cage ou cartouche Gd, la chambre CV étant donc ménagée directement dans la bague Gd, tandis que la rainure 64 est éliminée, les orifices 98 et 102 ne formant qu'un.

Le flux de gaz qui circule à l'intérieur de la rainure 94 et qui débouche dans la chambre CV peut être constitué soit par le flux de gaz moteur, soit par un tout autre flux de préférence gazeux et ce, encore une fois, dans le cas d'une transmission du mouvement vers le rotor du type à engrenage.

Dans ce mode de réalisation, la rondelle élastique 60a couvre totalement la chambre CV qui comporte une forme annulaire autour du rotor 4, et plus particulièrement autour de l'arbre formant mandrin 6. On remarque donc que la bague 200 a la fonction des entretoises de blocage précédemment décrites, puisqu'elle maintient par pincement et par encastrement la rondelle 60a fixement par rapport au bâti 2 à l'intérieur de la cage Gd. Cette bague 200 a une fonction supplémentaire puisqu'elle forme la chambre CV qui permet la création d'une pression d'actionnement sur une des faces de la rondelle 60a qui, on le remarque, au repos demeure en position d'appui sur la bague 200 qui est fixe.

La rondelle 60a est donc apte à se déplacer axialement par rapport au rotor pour venir frotter sur des moyens de contre-appui 70 du rotor 4, qui sont ici constitués par un côté de la bague intérieure du roulement inférieur 12.

Le fonctionnement de ce mode de réalisation est le suivant.

Lorsqu'aucun fluide d'actionnement n'est amené par la rainure circulaire 94, la rondelle élastique 60a se trouve dans sa position de repos représentée à la figure 11, les moyens de freinage étant relâchés, puisque dans cette position la rondelle 60a ne frotte sur aucune pièce en mouvement.

Toutefois, lorsque l'on commande l'arrivée d'un flux Fa qui génère une pression plus élevée à l'intérieur de la rainure 94 et donc dans la chambre CV, la rondelle élastique 60a se déforme et son pourtour intérieur se déplace axialement en direction des moyens de contre-appui 70 jusqu'à venir frotter sur celui-ci.

On comprend donc que le fonctionnement de ce mode de réalisation est sensiblement différent de ceux précédemment décrits. En effet, dans cet agencement, les moyens de freinage sont à l'état relâché (état zéro) en l'absence de flux d'actionnement gazeux, tandis qu'ils sont à l'état actionné (état un) lorsque l'on commande l'arrivée d'un flux Fa dans la chambre CV.

Dans le cas d'un entraînement par turbine du rotor 4, on choisira une intensité du flux d'actionnement Fa telle que la pression exercée sur la face de la rondelle 60a, en regard de la bague 200, soit supérieure à celle qui est présente en regard des moyens de contre-appui 70.

Là encore, le rotor 4 peut être entraîné par une transmission du type à engrenage puisque le dispositif d'amenée du fluide gazeux Fa vers les moyens de freinage est indépendant de l'entraînement du rotor 4.

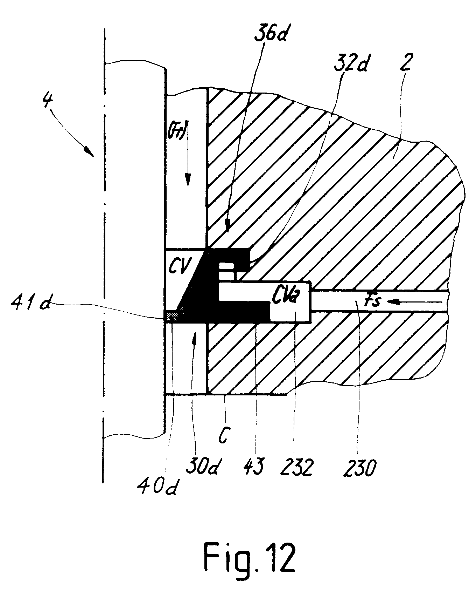

En se référant désormais à la figure 12, on décrira ci-après un onzième mode de réalisation de l'invention, dans lequel les moyens de freinage sont constitués par une manchette ou joint à lèvres 30d dont le fonctionnement et la structure sont en partie similaires à la manchette 30 décrite en rapport avec la figure 1.

Toutefois, dans ce mode de réalisation, la manchette 30d peut de plus être actionnée latéralement par un flux d'actionnement secondaire Fs provenant d'un canal d'arrivée 230. Ce canal d'arrivée 230 débouche dans une rainure circulaire 232 qui est ménagée dans le bâti 2 de façon coaxiale au rotor 4.

La manchette 30d comporte sur son pourtour extérieur une lèvre supplémentaire 43 qui s'étend de façon circulaire et qui est logée à l'intérieur de la rainure 232 en contact glissant et étanche sur l'un des flancs latéraux de cette rainure 232.

Ainsi, en plus de la chambre CV une nouvelle chambre à volume variable CVa est définie à l'intérieur de la rainure 232 par l'intermédiaire du pourtour circulaire extérieur de la manchette 30d. On remarquera que cette manchette 30d est encastrée par un siège 36d à l'intérieur d'un logement 32d ménagé dans le bâti 2.

La lèvre intérieure 40d de la manchette 30d peut, dans une première variante, avoir sur le rotor 4 une action similaire à celle de la manchette 30 de la figure 1.

Dans ce cas, le flux résiduel Fr vient décoller la lèvre 40d lors de l'entraînement en rotation du rotor 4 pour relâcher la prise des moyens de freinage sur le rotor.

A ce stade de fonctionnement, le flux secondaire Fs n'intervient pas. Toutefois, lorsque l'entraînement en rotation du rotor 4 est coupé, il est possible d'aider l'action élastique de la manchette 30d en faisant intervenir le flux secondaire Fs qui vient renforcer l'action de la lèvre 40d sur le rotor 4 et favoriser l'action de freinage.

Les deux flux Fr et Fs étant indépendants on peut actionner les moyens de freinage 30d à tout moment par un choix judicieux des intensités de flux respectives.

Dans une autre variante, non représentée, le mode de fonctionnement de ces moyens de freinage est similaire à celui qui a été décrit en rapport avec la figure 11. Dans ce cas, la lèvre 40d de la manchette 30d ne présente aucune action de pression sur le rotor 4 lorsque cette manchette 30d est à l'état de repos. Toutefois, lorsque l'on souhaite avoir une action de freinage, on commande l'arrivée du flux d'actionnement secondaire Fs dans la chambre CVa ce qui déplace radialement la lèvre 40d en direction du rotor 4, et ce qui freine le mouvement du rotor 4.

On précisera aussi que dans cet exemple de réalisation, le rotor 4 peut être constitué par tout élément monté rotatif par rapport au bâti 2, ce bâti pouvant être par exemple constitué par le corps ou manche C d'une pièce à main selon l'invention.

La chambre à volume variable CVa étant totalement étanche le flux Fs peut être constitué par un fluide liquide dont l'arrivée est commandée par un mécanisme, non représenté. Ce fluide liquide peut être dérivé du fluide liquide de "spray" dont on a fait mention ci-avant.

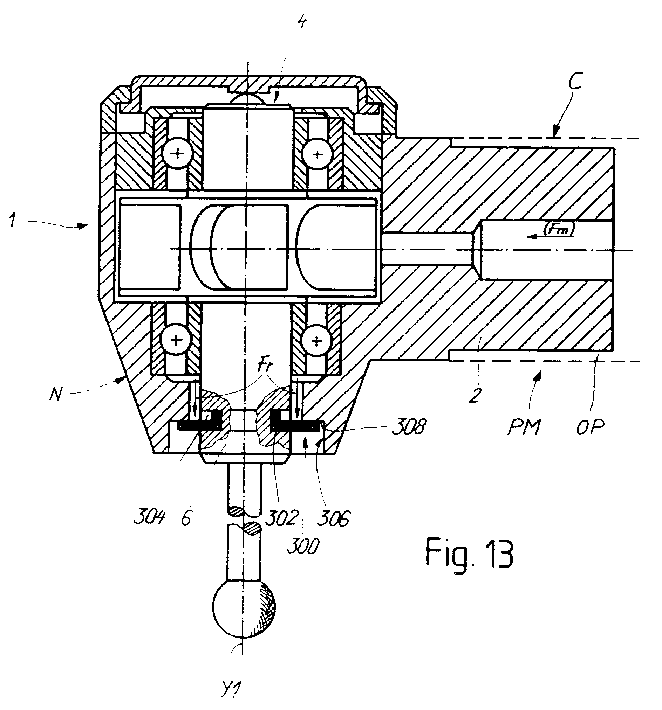

On se référera désormais à la figure 13 qui représente un douzième mode de réalisation de l'invention.

Dans ce mode de réalisation, les moyens de freinage sont constitués par une rondelle élastique 300 qui est montée fixe par rapport au rotor 4, et qui plus particulièrement qui est encastrée à l'intérieur de l'arbre formant mandrin 6.

A cet effet, la rondelle élastique 300 comporte un siège 302 qui est monté à l'intérieur d'un logement 304 ménagé dans l'arbre 6. Par ailleurs, le bâti 2 comporte un chambrage 306 dont un épaulement 308 forme des moyens de contre-appui sur lesquels le pourtour périphérique extérieur de la rondelle élastique 300 est susceptible de venir frotter en contact de pression.

On remarque donc que, dans ce mode de réalisation, la rondelle élastique 300 qui forme les moyens de freinage, est mobile en rotation par rapport au bâti 2, et notamment à l'intérieur de la tête 1 de la pièce à main selon l'invention.

Le mode de fonctionnement de ce mode de réalisation est aussi basé sur l'intervention d'un flux de gaz résiduel Fr provenant du flux moteur Fm qui actionne le rotor 4.

Ainsi, au moment où le rotor 4 est entraîné en rotation le flux résiduel Fr agit sur la rondelle élastiquement déformable 300 pour que celle-ci quitte son appui sur le bâti 2 et que son pourtour extérieur se déplace axialement pour libérer le mouvement du rotor 4. Lorsque la commande d'entraînement en rotation du rotor 4 est coupée, et en l'absence de flux sur celle-ci, la rondelle élastique 300 retrouve sa position et freine le mouvement de rotation du rotor 4. Là aussi, les moyens de freinage forment de plus une barière anti-poussière qui empêche la contamination de l'intérieur de la tête 1, surtout au moment de la décélération du rotor 4.

On précisera encore que dans ce mode de réalisation la résultante des efforts exercés sur le contre-appui 308 par la rondelle 300 est orientée axialement à la tête 1, c'est-à-dire de façon parallèle à l'axe géométrique de rotation Y1.

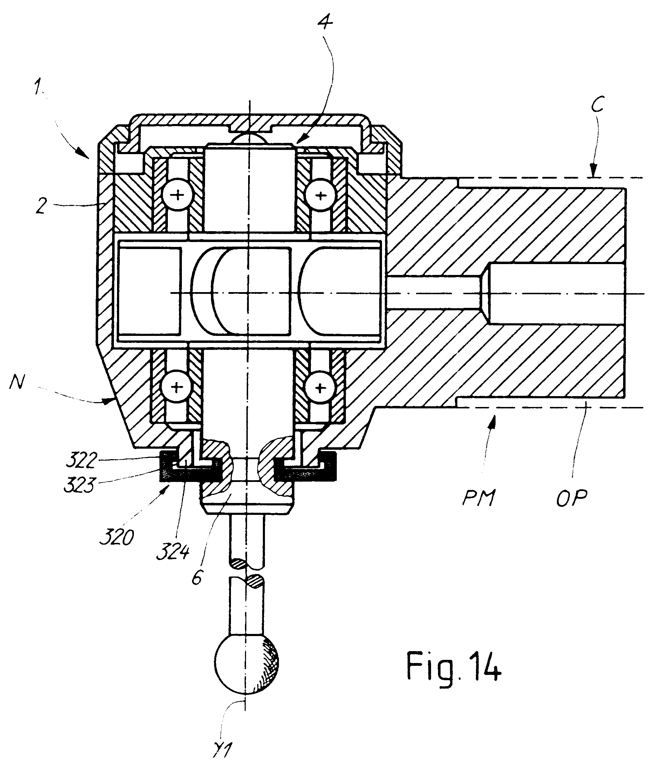

En se référant désormais à la figure 14, on décrira ci-après un treizième mode de réalisation de l'invention, dans lequel les moyens de freinage sont constitués par une manchette ou joint à lèvre 320 qui est encastré dans l'arbre formant mandrin 6 du rotor 4, de façon similaire à la manchette 300 précédemment décrite.

Toutefois, dans ce mode de réalisation la manchette 320 comporte à son extrémité libre une lèvre 322 qui est maintenue en contact de pression contre une portée cylindrique 322 d'une paroi 324 ménagée dans le nez N du bâti 2. La résultante des forces d'appui de la lèvre 322 sur la paroi 324 du bâti 2 est orientée radialement, c'est-à-dire de façon sensiblement normale par rapport à l'axe géométrique de rotation Y1 du rotor 4. Le fonctionnement de ce mode de réalisation est similaire à celui précédemment décrit, puisque la manchette 320 qui est mobile en rotation fournit une action de freinage du rotor 4 par rapport au bâti 2 lorsque la manchette 320 n'est pas solicitée, c'est-à-dire en l'absence d'un flux d'actionnement gazeux sur la manchette 320. Cependant, lorsqu'un flux d'actionnement gazeux est présent et qu'il sollicite la manchette 320, la lèvre 322 se dégage de son appui avec la paroi cylindrique 324 qui forme des moyens de contre-appui, ce qui libère le rotor 4. On remarquera que dans ce mode de réalisation on profite de plus de la force centrifuge pour aider la lèvre 322 à s'écarter de son contact avec la paroi 324 du bâti 2.

On comprendra que pour tous les modes de réalisation qui viennent d'être décrits, les moyens de freinage en étant formés par une ou plusieurs manchettes, ou par une ou plusieurs rondelles élastiquement déformables, enveloppent l'arbre du rotor et forment autour de celui-ci un clapet dont l'ouverture, qui est assurée par un flux de commande, tel qu'un flux du fluide moteur ou une partie de celui-ci, permet le passage dudit fluide à la périphérie de l'arbre du rotor et le pilotage des moyens d'appui.

On obtient donc un agencement simple et compact, d'un encombrement faible et susceptible par la même occasion de chasser toutes les impuretés qui pourraient s'introduire dans la tête ou dans la pièce à main selon l'invention.

## Revendications

1. Tête de pièce à main dentaire comprenant un carter ou bâti (2), un rotor (4) disposé à l'intérieur du bâti (2) et muni d'un arbre qui est destiné à recevoir un outil (8), des moyens moteurs (20) permettant d'entraîner ledit rotor (4) pour lui impliquer un mouvement et des moyens de freinage qui agissent sur le rotor pour stopper son mouvement et qui sont actionnés par un flux de commande provenant d'un fluide, les moyens de freinage comportant un organe élastiquement déformable associé à des moyens d'appui et de contre-appui susceptibles de freiner la rotation du rotor par frottement, caractérisée en ce que lesdits moyens de freinage enveloppent l'arbre du rotor et forment autour de celui-ci un clapet dont l'ouverture, qui est assurée par le flux de commande lui-même, permet le passage du fluide à la périphérie dudit arbre et le pilotage des moyens d'appui.

2. Tête de pièce à main dentaire comprenant un carter ou bâti (2), un rotor (4) disposé à l'intérieur du bâti (2) et destiné à recevoir un outil (8), des moyens moteurs (20) permettant d'entraîner ledit rotor pour lui impliquer un mouvement et des moyens de freinage qui agissent sur le rotor pour stopper son mouvement et qui sont actionnés par un flux de commande (Fm, Fr, Fp) provenant d'un fluide, caractérisée en ce que lesdits moyens de freinage sont conformés de sorte que ledit flux (Fm, Fr, Fp), lorsqu'il croît en intensité, commande la mise à l'état "0" desdits moyens de freinage et inversement leur mise à l'état "1" lorsqu'il diminue.

3. Tête de pièce à main selon la revendication 1 ou 2, dans laquelle le rotor (4) comporte une turbine (20) formant lesdits moyens moteurs, caractérisée en ce que ledit flux de commande est formé au moins indirectement par un flux de gaz moteur (Fm) qui pilote la turbine (20) et/ou par un flux d'un fluide de pulvérisation (Fp) destiné au refroidissement d'un site de travail.

4. Tête de pièce à main selon la revendication 2, caractérisée en ce que lesdits moyens de freinage comportent des moyens d'appui (41) aptes à venir en contact de frottement sur des moyens de contre-appui (6, 70, 308, 324), ces moyens d'appui étant soumis à l'action d'un organe élastique de rappel (42, 42a, 42b, 42c) qui tend en permanence à mettre les moyens d'appui (41) en contact sur lesdits moyens de contre-appui.

5. Tête de pièce à main selon la revendication 4 dans laquelle le rotor (4) comporte un arbre formant mandrin (6) qui reçoit l'outil (8), caractérisée en ce que lesdits moyens de freinage enveloppent l'arbre du rotor (4) et forment autour de celui-ci un clapet dont l'ouverture, qui est assurée par le flux de commande lui-même, permet le passage du fluide à la périphérie de l'arbre du rotor et le pilotage des moyens d'appui.

6. Tête de pièce à main selon la revendication 3, caractérisée en ce que lesdits moyens de freinage sont pilotés par un flux gazeux résiduel (Fr) qui provient du flux de gaz moteur (Fm).

7. Tête de pièce à main selon l'une des revendications précédentes, caractérisée en ce que lesdits moyens de freinage sont constitués par au moins une manchette (30, 30a, 30b, 30c, 30d) qui est montée fixement par rapport au carter ou bâti (2) et qui enveloppe de façon étanche au moins une partie du rotor (4).

8. Tête de pièce à main selon les revendications 4 et 7, caractérisée en ce que ladite manchette (30, 30a, 30b, 30c, 30d) comporte une lèvre (40, 40a, 40b, 40c, 40d) qui forme lesdits moyens d'appui (41), cette lèvre (40, 40a, 40b, 40c, 40d) venant de matière avec une jupe (42, 42a, 42b, 42c, 42d) constituant l'organe élastique de rappel qui sollicite ladite lèvre.

9. Tête de pièce à main selon la revendication 7 ou 8, caractérisée en ce que ladite manchette (30, 30a, 30b, 30c) est disposée au voisinage de l'une des extrémités axiales du rotor.

10. Tête de pièce à main selon l'une des revendications 3 à 7, caractérisée en ce que lesdits moyens de freinage agissent sur au moins l'un des flancs latéraux (54, 56) d'un corps d'aubage (24) de la turbine (20).

11. Tête de pièce à main selon la revendication 10, caractérisée en ce que lesdits moyens de freinage comportent deux manchettes (30b, 30c) montées de part et d'autre du corps d'aubage (24) de la turbine (20).

12. Tête de pièce à main selon l'une des revendications 1 à 6, caractérisée en ce que lesdits moyens de freinage comportent au moins une rondelle annulaire (60, 104) sollicitant, à l'état de repos, les moyens de contre-appui (70) de façon élastique.

13. Tête de pièce à main selon la revendication 12, caractérisée en ce que ladite rondelle élastique (60, 104) est maintenue de façon fixe par rapport au carter ou bâti (2) par pincement de son pourtour extérieur entre deux épaulements (62, 64).

14. Tête de pièce à main selon la revendication 13, caractérisée en ce que l'un des épaulements permettant ledit pincement, ainsi que lesdits moyens de contre-appui du rotor sont constitués par des entretoises, dites respectivement de blocage (66, 66a, 106) et de contre-appui (72, 72a), ces entretoises présentant des épaisseurs différentes, l'entretoise de contre-appui (72) présentant une épaisseur supérieure à l'entretoise de blocage (66).

15. Tête de pièce à main selon l'une des revendications 1 à 6 et 12 ou 13, caractérisée en ce que les moyens de freinage comportent une douille ou manchon (110) réalisé en matériau métallique et interposé de façon coaxiale au rotor (4) entre la rondelle élastique (60) et les moyens de contre-appui (70) du rotor (4).

16. Tête de pièce à main selon l'une des revendications précédentes, caractérisée en ce que lesdits moyens de freinage forment un bouclier anti-poussière assurant le chassage des poussières à l'extérieur de la tête.

17. Tête de pièce à main selon l'une des revendications 1 à 6, caractérisée en ce que les moyens de freinage comportent une manchette (320) ou une rondelle élastique (300) montée fixe sur le rotor (4) et susceptible de venir agir par contact de pression sur le bâti (2).

18. Tête de pièce à main selon la revendication 17, caractérisée en ce que la manchette (320) comporte une lèvre (322) coopérant avec une portée circulaire (323) ménagée à l'extrémité d'un nez (N) de ladite tête.

19. Pièce à main comprenant un carter ou bâti (2), un rotor (4) disposé à l'intérieur du bâti (2) et des moyens de freinage susceptibles d'agir sur un arbre du rotor (4) pour stopper son mouvement, lesdits moyens de freinage étant actionnés par un flux de commande provenant d'un fluide, tandis qu'ils comportent un organe élastiquement déformable associé à des moyens d'appui et de contre-appui susceptibles de freiner la rotation du rotor (4) par frottement, caractérisée en ce que les moyens de freinage enveloppent l'arbre du rotor (4) et forment autour de celui-ci un clapet dont l'ouverture, qui est assurée par le flux de commande lui-même, permet le passage du fluide à la périphérie de l'arbre du rotor et le pilotage des moyens d'appui.

20. Pièce à main selon la revendication 19, caractérisée en ce que lesdits moyens de freinage sont conformés de sorte que ledit flux (Fm, Fr, Fp), lorsqu'il croît en intensité, commande la mise à l'état "0" desdits moyens de freinage et inversement leur mise à l'état "1" lorsqu'il diminue.

21. Pièce à main selon la revendication 19 ou 20, caractérisée en ce que lesdits moyens de freinage sont constitués par au moins une manchette ou par une rondelle déformable élastiquement.

## Claims

1. Head for a dental handpiece comprising a casing or mounting (2), a rotor (4) arranged within said mounting (2) and provided with a spindle intended to accommodate a tool (8), motor means (20) enabling the driving of said rotor (4) in order to impart motion thereto and braking means which act on the rotor to stop its motion and which are actuated by a control stream deriving from a fluid, the braking means including an elastically deformable element associated with bearing and counter-bearing means adapted to brake rotation of the rotor by friction, characterized in that said braking means envelop the rotor spindle and form a flap valve thereabout, the opening of which, assured by the control stream itself enables the passage of fluid at the periphery of said spindle and the control of the bearing means.

2. Head for a dental handpiece comprising a casing or mounting (2), a rotor (4) arranged within said mounting (2) and intended to accommodate a tool (8), motor means (20) enabling the driving of said rotor in order to impart motion thereto and braking means which act on the rotor to stop its motion and which are actuated by a control stream (Fm, Fr, Fp) deriving from a fluid, characterized in that said braking means are fashioned in a manner such that said stream (Fm, Fr, Fp) brings about the putting of said braking means into the "0" state when it increases in intensity and, inversely, into the "1" state when it diminishes.

3. Head for a handpiece according to claim 1 or 2, in which the rotor (4) includes a turbine (20) forming said motor means, characterized in chat said control stream is formed at least indirectly by a flow of motor gas (Fm) which controls the turbine (20) and/or by a flow of atomization fluid (Fp) intended for cooling the work site.

4. Head for a handpiece according to claim 2, characterized in that said braking means include bearing means (41) adapted to come into rubbing contact with counter-bearing means (6, 70, 308, 324), such bearing means being subjected to the action of an elastic return element (42, 42a, 42b, 42c) which constantly tends to bring the bearing means (41) into contact with said counter-bearing means.

5. Head for a handpiece according to claim 4 in which the rotor (4) includes a spindle forming a chuck (6) to receive the tool (8), characterized in that said braking means envelop the rotor (4) spindle and form a flap valve thereabout, the opening of which, assured by the control stream itself, enables passage of the fluid at the periphery of the rotor spindle and control of the bearing means.

6. Head for a handpiece according to claim 3, characterized in that said braking means are controlled by a residual gaseous stream (Fr) deriving from the motor gas stream (Fm).

7. Head for a handpiece according to one of the preceding claims, characterized in that said braking means are formed by at least one collar (30, 30a, 30b, 30c, 30d) which is fixedly assembled relative to the mounting or casing (2) and which envelops at least a portion of the rotor (4) in a sealed manner.

8. Head for a handpiece according to claims 4 to 7, characterized in that said collar (30, 30a, 30b, 30c, 30d) includes a lip (40, 40a, 40b, 40c, 40d) which forms said bearing means (41), such lip (40, 40a, 40b, 40c, 40d), together with a skirt (42, 42a, 42b, 42c, 42d) being formed from material constituting an elastic return element which stresses said lip.

9. Head for a handpiece according to claim 7 or 8, characterized in that said said collar (30, 30a, 30b, 30c, 30d) is arranged proximate one of the axial extremities of the rotor.

10. Head for a handpiece according to one of claims 3 to 7, characterized in that said braking means act on at least one of the side faces (54, 56) of a blade carrier (24) of the turbine (20).

11. Head for a handpiece according to claim 10, characterized in that said said braking means include two collars (30b, 30c) assembled on either side of the turbine (20) blade carrier (24).

12. Head for a handpiece according to one of claims 1 to 6, characterized in that said braking means include at least one annular washer (60, 104) which in its rest state elastically stresses the counter-bearing means (70).

13. Head for a handpiece according to claim 12, characterized in that the elastic washer (60, 104) is fixedly retained relative to the mounting or casing (2) by squeezing its outer periphery between two shoulders (62, 64).

14. Head for a handpiece according to claim 13, characterized in that one of the shoulders enabling said squeezing as well as said rotor counter-bearing means are formed by spacer tubes respectively referred to as blocking (66, 66a, 106) and as counter-bearing (72, 72a), such spacer tubes showing different thicknesses, the counter-bearing (72) spacer tube showing a thickness greater than that of the blocking spacer tube (66).

15. Head for a handpiece according to one of claims 1 to 6 and 12 or 13, characterized in that the braking means include a socket or sleeve (110) formed of metallic material and interposed coaxial to the rotor (4) between the elastic washer (60) and the rotor (4) counter-bearing means (70).

16. Head for a handpiece according to one of the preceding claims, characterized in that said braking means form an antidust shield asuring the driving of dust to the exterior of the head.

17. Head for a handpiece according to one of claims 1 to 6, characterized in that said braking means include a collar (320) or an elastic washer (300) fixedly assembled onto the rotor (4) and adapted to come into action by pressure contact on the mounting (2).

18. Head for a handpiece according to claim 17, characterized in that the collar (320) includes a lip (322) cooperating with a circular support surface (323) provided at the end of a nose (N) on said head.

19. Handpiece comprising a casing or mounting (2), a rotor (4) arranged within said mounting (2) and braking means adapted to act on a spindle of the rotor (4) to stop its motion, said braking means being actuated by a control stream derived from a fluid while they include an elastically deformable element associated with bearing and counter-bearing means adapted to brake the rotation of the rotor (4) by friction, characterized in that the braking means envelop the rotor (4) spindle and form a flap valve thereabout, the opening of which, assured by the control stream itself enables the passage of fluid at the periphery of the rotor spindle and the control of the bearing means.

20. Handpiece according to claim 19, characterized in that said braking means are fashioned in a manner such that said stream (Fm, Fr, Fp) controls the putting of said braking means into the "0" state when it increases in intensity and, inversely, into the "1" state when it diminishes.

21. Handpiece according to claim 19 or 20, characterized in that said braking means are constituted by at least one collar or by an elastically deformable washer.

## Patentansprüche

1. Kopf eines zahnärztlichen Handstücks, umfassend einen Grundrahmen oder ein Gehäuse (2), einen im Inneren des Gehäuses (2) angeordneten Rotor (4), versehen mit einer Welle, die zur Aufnahme eines Werkzeugs (8) bestimmt ist, Antriebsmittel (20) zum Ermöglichen des Antriebs des Rotors (4), um ihm eine Bewegung zu verleihen, und Bremsmittel, die auf den Rotor einwirken, um seine Bewegung abzustoppen und die betätigbar sind durch eine Steuerströmung, herrührend von einem Fluid, wobei die Bremsmittel ein elastische deformierbares Organ umfassen, das Anlegemitteln und Gegenanlegemitteln zugeordnet ist, die die Drehung des Rotors durch Reibung abbremsen können, dadurch gekennzeichnet, daß die Abbremsmittel die Rotorwelle umschließen und rings um diese ein Ventil bilden, dessen Öffnung, welche durch die Steuerströmung selbst bewirkt wird, den Durchtritt des Fluids an der Peripherie der Welle und die Steuerung der Anlegemittel ermöglicht.

2. Kopf eines zahnärztlichen Handstücks mit einem Grundrahmen oder Gehäuse (2), einem im Inneren des Gehäuses (2) angeordneten Rotor (4), bestimmt zur Aufnahme eines Werkzeugs (8), Antriebsmitteln (20), die es ermöglichen, den Rotor anzutreiben, um ihm eine Bewegung zu verleihen, und Bremsmittel, die auf den Rotor einwirken, um seine Bewegung abzustoppen, und die betätigt werden durch eine Steuerströmung (Fm, Fr, Fp), herrührend von einem Fluid, dadurch gekennzeichnet, daß die Bremsmittel derart ausgebildet sind, daß die Strömung (Fm, Fr, Fp) bei ihrer Zunahme an Intensität die Bremsmittel in den Zustand "0" steuert und umgekehrt in den Zustand "1", wenn sie abnimmt.

3. Kopf eines Handstücks nach Anspruch 1 oder 2, bei dem der Rotor (4) eine Turbine (20) umfaßt, welche die Antriebsmittel bildet, dadurch gekennzeichnet, daß die Steuerströmung mindestens indirekt durch eine Strömung eines Antriebsgases (Fm) gebildet wird, welche die Turbine (20) antreibt und/oder von einem Fluß eines Zerstäuberfluids (Fp), bestimmt zum Kühlen der Arbeitsstelle.

4. Kopf eines Handstücks nach Anspruch 2, dadurch gekennzeichnet, daß die Bremsmittel Anlegemittel (41) umfassen, ausgebildet zum In-Reibungskontakt-Gelangen auf den Gegenanlegemitteln (6, 70, 308, 324), wobei diese Anlegemittel der Wirkung eines elastischen Rückstellorgans (42, 42a, 42b, 42c) unterworfen sind, welche dahin tendiert, die Anlegemittel (41) permanent in Kontakt mit den Gegenanlegemitteln zu halten.

5. Kopf eines Handstücks nach Anspruch 4, bei dem der Rotor (4) eine eine Spindel (6), die das Werkzeug (8) aufnimmt, bildende Welle umfaßt, dadurch gekennzeichnet, daß die Bremsmittel die Welle des Rotors (4) umschließen und rings um diesen ein Ventil bilden, dessen Öffnung, welche durch die Steuerströmung selbst bewirkt wird, den Durchtritt des Fluids an der Peripherie der Welle des Rotors und das Steuern der Anlegemittel ermöglicht.

6. Kopf eines Handstücks nach Anspruch 3, dadurch gekennzeichnet, daß die Bremsmittel von einer Restgasströmung (Fr) gesteuert werden, die von der Antriebsgasströmung (Fm) herrührt.

7. Kopf eines Handstücks nach einem der vorangehenden Ansprüche, dadurch gekennzeichnet, daß die Bremsmittel von mindestens einer Manschette (30, 30a, 36b, 30c, 30d) gebildet sind, die fest relativ zu dem Grundrahmen oder Gehäuse (2) montiert ist und die abdichtend mindestens eine Partie des Rotors (4) umschließt.

8. Kopf eines Handstücks nach Ansprüchen 4 und 7, dadurch gekennzeichnet, daß die Manschette (30, 30a, 30b, 30c, 30d) eine Lippe (40, 40a, 40b, 40c, 40d) umfaßt, welche die Anlegemittel (41) bildet, welche Lippe (40, 40a, 40b, 40c, 40d) einstückig mit einer Schürze (42, 42a, 42b, 42c, 42d) ausgebildet ist, welche das elastische Rückstellorgan, das die Lippe vorspannt, bildet.

9. Kopf eines Handstücks nach Anspruch 7 oder 8, dadurch gekennzeichnet, daß die Manschette (30, 30a, 30b, 30c) nahe einem der axialen Enden des Rotors angeordnet ist.

10. Kopf eines Handstücks nach einem der Ansprüche 3 bis 7, dadurch gekennzeichnet, daß die Bremsmittel auf mindestens eine der seitlichen Flanken (54, 56) eines Beschaufelungskorpus (24) der Turbine (20) einwirken.

11. Kopf eines Handstücks nach Anspruch 10, dadurch gekennzeichnet, daß die Bremsmittel zwei Manschetten (30b, 30c) umfassen, beidseits des Beschaufelungskorpus (24) der Turbine (20) angeordnet.

12. Kopf eines Handstücks nach einem der Ansprüche 1 bis 6, dadurch gekennzeichnet, daß die Bremsmittel mindestens eine Ringscheibe (60, 104) umfassen, die im Ruhezustand die Gegenanlegemittel (70) elastisch vorspannt.

13. Kopf eines Handstücks nach Anspruch 12, dadurch gekennzeichnet, daß die elastische Scheibe (60, 104) relativ zum Grundrahmen oder Gehäuse (2) festgehalten wird durch Einklemmen ihres äußeren Umfangs zwischen zwei Schultern (62, 64).

14. Kopf eines Handstücks nach Anspruch 13, dadurch gekennzeichnet, daß eine der Schultern, welche das Einklemmen ermöglichen, wie auch die Gegenanlegemittel des Rotors von als Blockierdistanzstück (66, 66a, 106) bzw. Gegenanlegedistanzstück (72, 72a) bezeichneten Distanzstücken gebildet sind, welche Distanzstücke unterschiedliche Dicken aufweisen, wobei das Gegenanlegedistanzstück (72) eine größere Dicke als das Blockierdistanzstück (66) aufweist.

15. Kopf eines Handstücks nach einem der Ansprüche 1 bis 6 und 12 oder 13, dadurch gekennzeichnet, daß die Bremsmittel eine Hülse oder Buchse (110) umfassen, hergestellt aus einem metallischen Material und koaxial zum Rotor (4) zwischen der elastischen Scheibe (60) und den Gegenanlegemitteln (70) des Rotors (4) eingefügt.

16. Kopf eines Handstücks nach einem der vorangehenden Ansprüche, dadurch gekennzeichnet, daß die Bremsmittel eine Staubabschirmung bilden, die das Austreiben des Staubes nach außen bezüglich des Kopfes sicherstellt.

17. Kopf eines Handstücks nach einem der Ansprüche 1 bis 6, dadurch gekennzeichnet, daß die Bremsmittel eine Manschette (320) oder eine elastische Scheibe (300) umfassen, fest an dem Rotor (4) montiert und in Druckkontakt bringbar an dem Gehäuse (2).

18. Kopf eine Handstücks nach Anspruch 17, dadurch gekennzeichnet, daß die Manschette (320) eine Lippe (322) umfaßt, die mit einer runden Auskragung (323) zusammenwirkt, die an das Ende einer Nase (N) des Kopfes angearbeitet ist.

19. Handstück, umfassend einen Grundrahmen oder ein Gehäuse (2), einen im Inneren des Gehäuses (2) angeordneten Rotor (4) und Bremsmittel, die auf eine Welle des Rotors (4) zum Abstoppen seiner Bewegung zur Einwirkung bringbar sind, welche Bremsmittel von einer Steuerströmung betätigbar sind, die von einem Fluid herrührt, während sie ein elastisch deformierbares Organ umfassen, zugeordnet Anlegemitteln und Gegenanlegemitteln, welche die Drehung des Rotor (4) durch Reibung abbremsen können, dadurch gekennzeichnet, daß die Bremsmittel die Welle des Rotors (4) umschließen und um diesen ein Ventil bilden, dessen Öffnung, die durch die Steuerströmung selbst bewirkt wird, den Durchtritt des Fluids an der Peripherie der Rotorwelle und das Steuern der Anlegemittel ermöglicht.

20. Handstück nach Anspruch 19, dadurch gekennzeichnet, daß die Bremsmittel derart ausgebildet sind, daß die Strömung (Fm, Fr, Fp), wenn ihre Intensität zunimmt, das Setzen der Bremsmittel auf den Zustand "0" steuert und umgekehrt ihr Setzen auf den Zustand "1", wenn sie an Intensität abnimmt.

21. Handstück nach Ansprüchen 19 oder 20, dadurch gekennzeichnet, daß die Bremsmittel von mindestens einer elastisch deformierbaren Manschette oder Scheibe gebildet sind.
